# EUROPÄISCHE PATENTSCHRIFT

(11) **EP 1 260 296 B1**
(45) Veröffentlichungstag und Bekanntmachung des Hinweises auf die Patenterteilung: **21.12.2005**
(21) Anmeldenummer: 02010169.7
(22) Anmeldetag: 14.05.2002
(51) Int. Cl.: B23B 51/02

(54) **Bohrer**
Drill
Foret

(30) Priorität: 15.05.2001 DE 20108179 U
(43) Veröffentlichungstag der Anmeldung: 27.11.2002
(73) Patentinhaber: PLICA WERKZEUGFABRIK AG, 8753 Mollis (CH)
(72) Erfinder: Runge, Erich, 74653 Künzelsau (DE)
(74) Vertreter: Sties, Jochen

(56) Entgegenhaltungen:
- EP-A- 0 790 092
- DE-B- 2 358 447
- US-A- 5 350 261
- US-A- 6 089 337

## Beschreibung

Die Erfindung betrifft einen Bohrer gemäß dem Oberbegriff des Anspruchs 1. Die Erfindung betrifft insbesondere einen Hammerbohrer zum Bearbeiten von Stein oder Beton.

Es ist bekannt, daß die Bohrleistung eines solchen Bohrers von einer Vielzahl von Parametern abhängt, beispielsweise Steigung der Wendel, Verhältnis von Spiraldurchmesser des Bohrers zu Kerndurchmesser, etc. Weiterhin ist bekannt, daß sich die verschiedenen Parameter wechselseitig beeinflussen, so daß eine Verbesserung auf einem Gebiet, beispielsweise der Bohrleistung, eine Verschlechterung auf einem anderen Gebiet nach sich ziehen kann, beispielsweise hinsichtlich der Standfestigkeit.

Aus der EP-A-0 790 092 (nächtliegender Stand der Technik) ist ein Bohrer mit einer Wendel bekannt, deren Steigung von der Spitze zum Antriebsabschnitt hin steiler wird.

Aus der US-A-6,089,337 ist ein Bohrer mit einer Wendel bekannt, deren Steigung an der Spitze steiler ist als im Bereich des Schaftes.

Die Aufgabe der Erfindung besteht darin, einen Bohrer der eingangs genannten Art dahingehend weiterzubilden, daß neue Freiheiten bei der Abstimmung der verschiedenen Parameter untereinander erhalten werden.

Diese Aufgabe wird erfindungsgemäß gelöst mit dem Merkmalen des kennzeichnenden Teils des Anspruchs 1. Mit der erfindungsgemäßen Geometrie wird eine besonders gute Bohrleistungen erhalten. Unter dem Begriff "Geometrie der Wendel" werden hier insbesondere die Steigung der Wendel sowie ihre Höhe verstanden, also die Hälfte der Differenz zwischen dem Spiraldurchmesser des Bohrers und dem Kerndurchmesser.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 einen erfindungsgemäßen Bohrer gemäß einer ersten Ausführungsform in einer Seitenansicht;
- Figur 2 einen erfindungsgemäßen Bohrer gemäß einer zweiten Ausführungsform in einer Seitenansicht;
- Figur 3 einen erfindungsgemäßen Bohrer gemäß einer dritten Ausführungsform in einer Seitenansicht;
- Figur 4 einen erfindungsgemäßen Bohrer gemäß einer vierten Ausführungsform in einer Seitenansicht;
- Figur 5 einen erfindungsgemäßen Bohrer gemäß einer fünften Ausführungsform in einer Seitenansicht;
- Figur 6 einen erfindungsgemäßen Bohrer gemäß einer sechsten Ausführungsform in einer Seitenansicht;
- Figur 7 einen erfindungsgemäßen Bohrer gemäß einer siebten Ausführungsform in einer Seitenansicht; und
- Figur 8 einen erfindungsgemäßen Bohrer gemäß einer achten Ausführungsform in einer Seitenansicht.

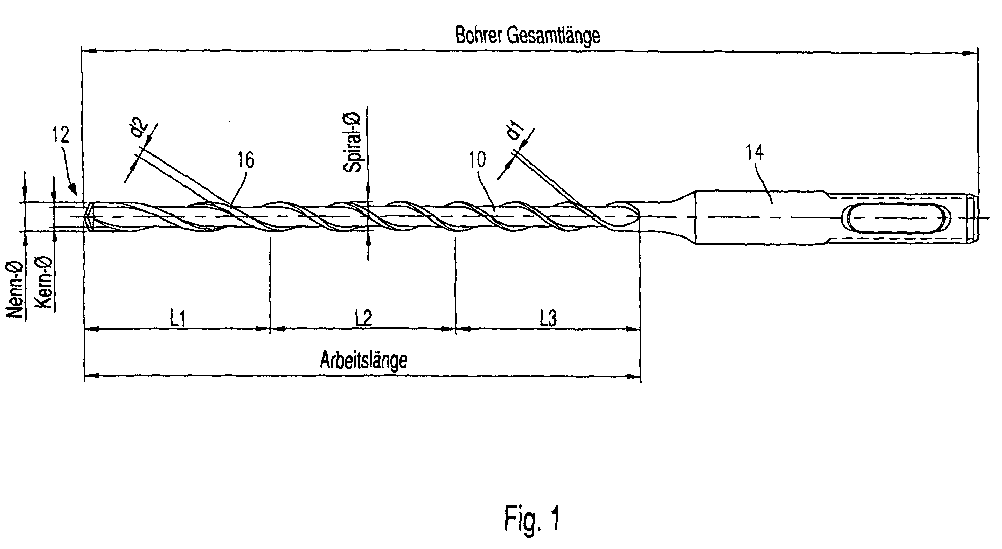

In Figur 1 ist ein Bohrer gemäß einer ersten Ausführungsform gezeigt. Er weist einen Schaft 10 auf, der sich ausgehend von einer Bohrspitze 12 bis hin zu einem Antriebsabschnitt 14 erstreckt, der in einem Werkzeug aufgenommen werden kann. Entlang dem Schaft 10 erstreckt sich eine Wendel 16, die eine variable Steigung hat. In einem vorderen Abschnitt L1 des Schaftes hat die Wendel 16 eine große Steigung, und in einem hinteren Abschnitt L3 des Schaftes hat die Wendel 10 eine kleinere Steigung. In einem mittleren Bereich L2 des Schaftes ändert sich die Steigung von der im vorderen Abschnitt vorliegenden größeren Steigung zur im hinteren Abschnitt vorliegenden kleineren Steigung. Der Spiraldurchmesser des Bohrers und der Kerndurchmesser sind entlang dem Schaft konstant, so daß die Wendel eine konstante Höhe hat. Die Breite der Wendel, gemessen parallel zur Längsachse des Bohrers, ändert sich entsprechend der Steigung. Im vorderen Abschnitt hat die Wendel eine größere Breite, und im hinteren Abschnitt hat sie eine geringere Breite. Die große Breite der Wendel in der Nähe der Bohrspitze schützt vor einer großen Abnutzung der Wendel, insbesondere dann, wenn harter Beton oder hartes Gestein gebohrt wird.

Beispielhaft seien hier die Abmessungen für einen Bohrer mit einem Nenndurchmesser von 6 mm gegeben: Die Arbeitslänge der Wendel beträgt insgesamt 100 mm bei einer Gesamtlänge des Bohrers von 160 mm. Der Kerndurchmesser beträgt 3,9 mm, und der Spiraldurchmesser beträgt 5,8 mm. Die Breite d 1 der Wendel im hinteren Abschnitt beträgt 1,4 mm, und die Breite d2 der Wendel im vorderen Abschnitt beträgt 2,8 mm. Die Steigung der Wendel ändert sich zwischen Werten von 19 und 23 mm.

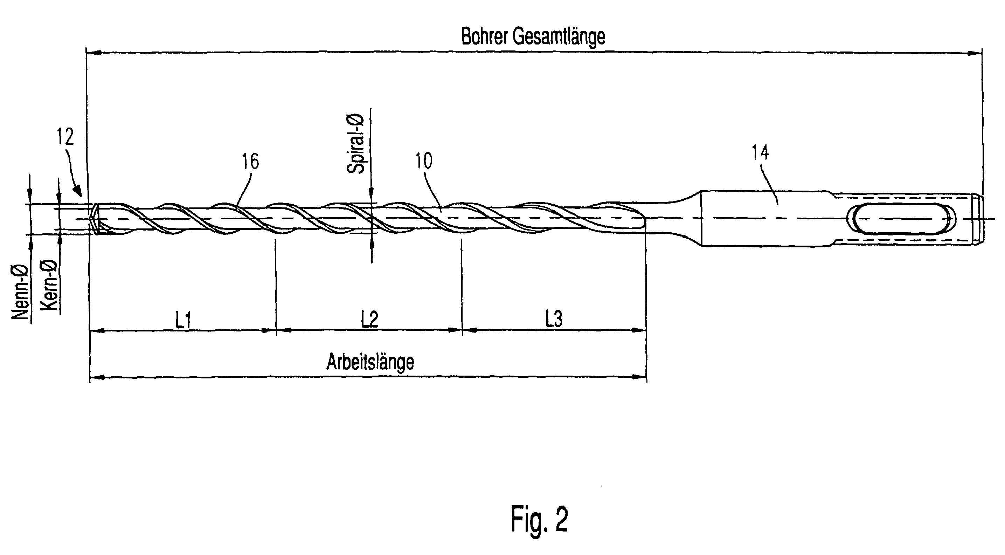

In Figur 2 ist ein Bohrer gemäß einer zweiten Ausführungsform gezeigt. Im Unterschied zur ersten Ausführungsform hat die Wendel hier ihre kleinere Steigung im vorderen Abschnitt L1 des Schaftes, während die größere Steigung im hinteren Abschnitt L3 des Schaftes vorliegt. Der Spiraldurchmesser und der Kerndurchmesser sind über den Schaft konstant. Bei dieser Gestaltung wird das Bohrmehl an der Bohrspitze vorne beschleunigt und dadurch schneller abgeführt. Durch die schnellere Abfuhr des Bohrmehls ergibt sich ein besserer Bohrfortschritt und eine höhere Bohrgeschwindigkeit.

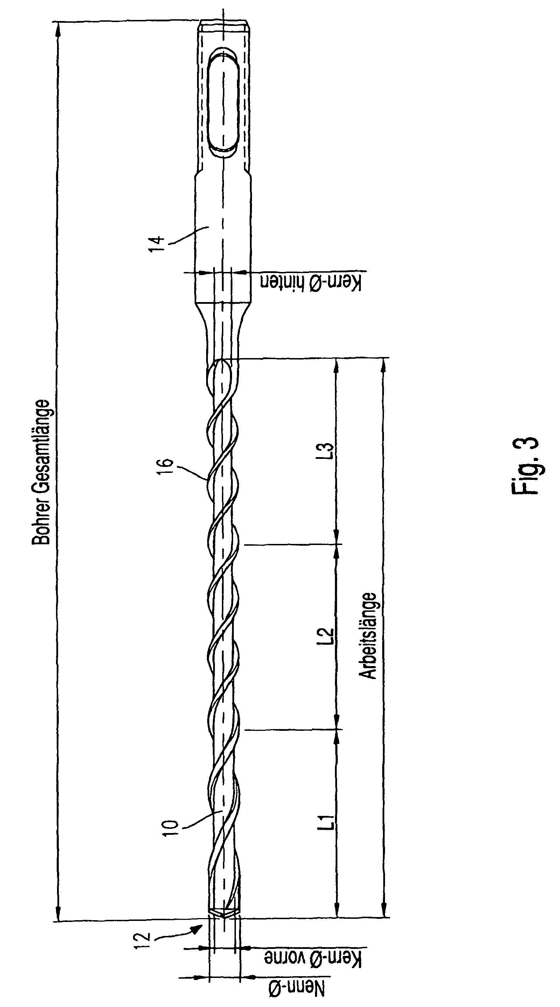

In Figur 3 ist ein Bohrer gemäß einer dritten Ausführungsform gezeigt. Bei dieser Ausführungsform hat die Wendel ähnlich wie bei der ersten Ausführungsform eine große Steigung im vorderen Abschnitt L1 des Schaftes und eine kleinere Steigung im hinteren Abschnitt L3 des Schaftes. Der Spiraldurchmesser des Bohrers ist entlang dem Schaft konstant. Jedoch verringert sich der Kerndurchmesser ausgehend von einem größeren Wert im Bereich der Bohrspitze auf einen kleineren Wert im Bereich des Übergangs zum Antriebsabschnitt. Durch die große Breite der Wendel im vorderen Abschnitt L1 des Schaftes ergibt sich eine verringerte Abnutzung der Wendel.

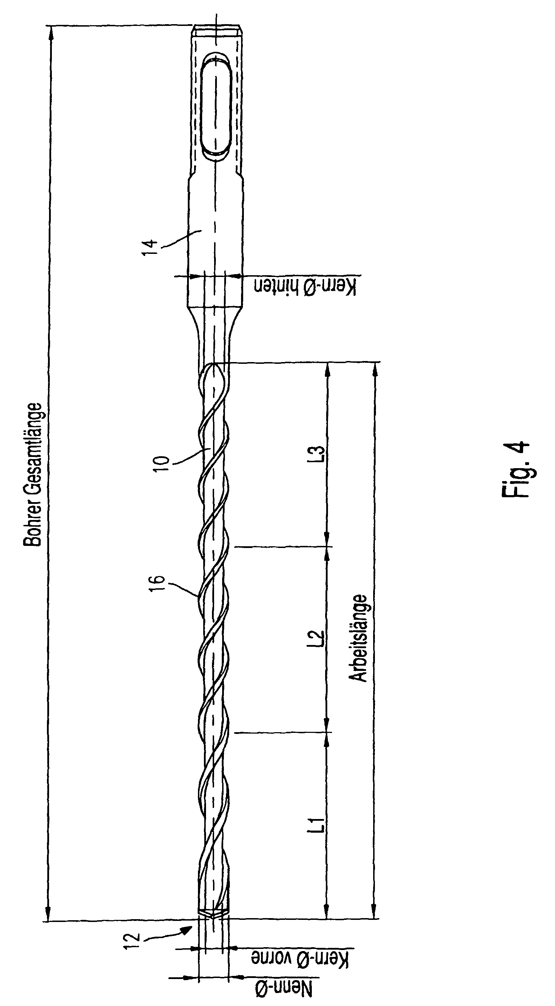

In Figur 4 ist ein Bohrer gemäß einer vierten Ausführungsform gezeigt, bei dem die Wendel in gleicher Weise wie bei der dritten Ausführungsform eine größere Steigung im vorderen Abschnitt L1 des Schaftes und eine kleinere Steigung im hinteren Abschnitt L3 des Schaftes hat. Im Unterschied zur dritten Ausführungsform steigt jedoch der Kerndurchmesser des Schaftes ausgehend von einem kleineren Wert im Bereich der Bohrspitze auf einen größeren Wert im Bereich des Übergangs zum Antriebsabschnitt an. Auf diese Weise kann die Hammerwirkung des Werkzeugs, das den Bohrer antreibt, besser zur Bohrspitze übertragen werden. Die große Breite der Wendel im vorderen Abschnitt verringert den Verschleiß.

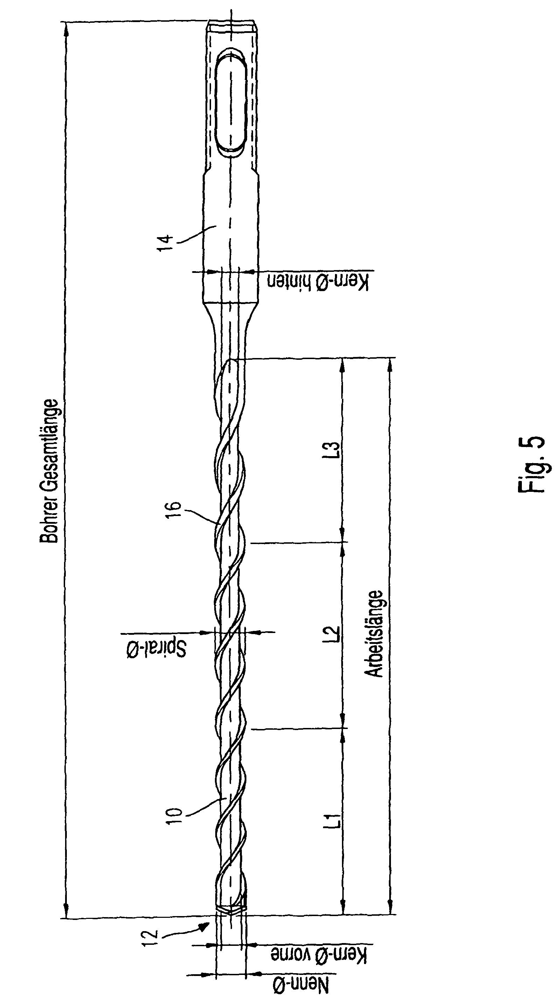

In Figur 5 ist ein Bohrer gemäß einer fünften Ausführungsform gezeigt. Bei dieser Ausführungsform weist die Wendel im vorderen Abschnitt L1 des Schaftes eine kleinere Steigung und im hinteren Abschnitt L3 des Schaftes eine größere Steigung auf. Auf diese Weise ergibt sich eine bessere Abfuhr des Bohrmehls im Bereich der Bohrspitze. Der Kerndurchmesser ist hier so ausgestaltet, daß er von einem größeren Wert im Bereich der Bohrspitze auf einen kleineren Wert im Bereich des Übergangs zum Antriebsabschnitt abfällt.

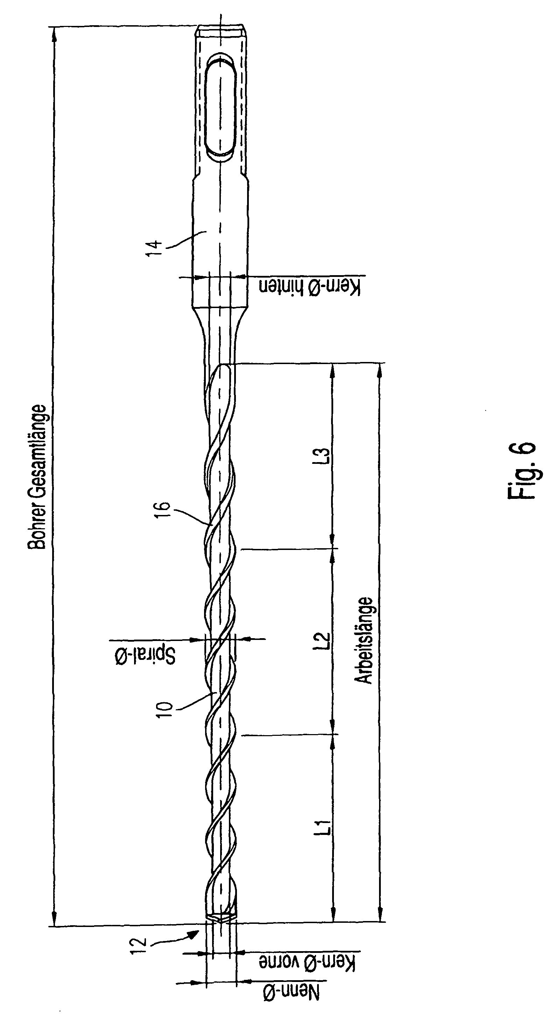

In Figur 6 ist ein Bohrer gemäß einer sechsten Ausführungsform gezeigt. Auch bei dieser Ausführungsform steigt die Steigung der Wendel von einem kleineren Wert im Bereich des vorderen Abschnittes L1 des Schaftes auf einen größeren Wert im Bereich des hinteren Abschnittes L3 an. Auf diese Weise ergibt sich im vorderen Bereich eine sehr gute Abfuhr des Bohrmehls. Der Kerndurchmesser steigt von einem kleineren Wert im Bereich der Bohrspitze auf einen größeren Wert im Bereich des Übergangs zum Antriebsabschnitt 14 hin an. Auf diese Weise wird die Hammerwirkung des Werkzeugs besser zur Bohrspitze übertragen.

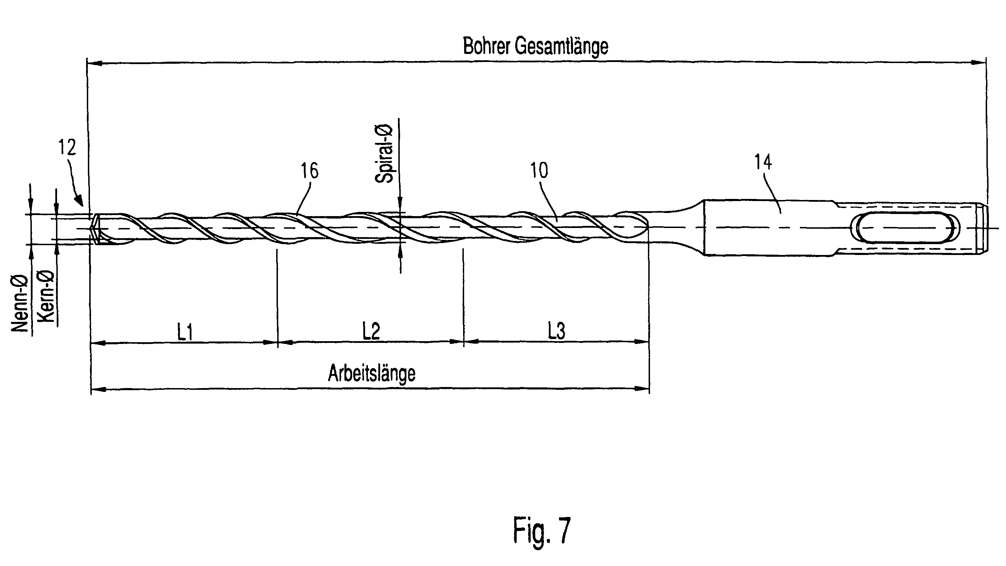

In Figur 7 ist ein Bohrer gemäß einer siebten Ausführungsform gezeigt. Bei dieser Ausführungsform sind der Kerndurchmesser und der Spiraldurchmesser konstant. Die Steigung der Wendel steigt von einem geringen Wert im vorderen Abschnitt L 1 auf einen größeren Wert im mittleren Abschnitt L2 des Schaftes an und sinkt abschließend wieder auf einen geringeren Wert im hinteren Abschnitt L3 des Schaftes ab. Die kleinere Steigung der Wendel im Bereich des vorderen Abschnittes L1 des Schaftes verbessert die Abfuhr des Bohrmehls.

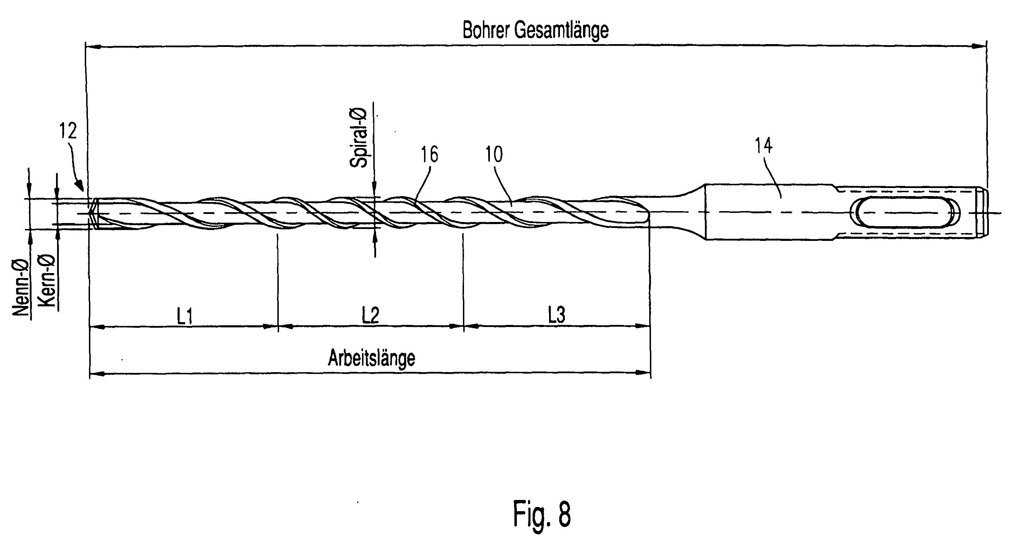

In Figur 8 ist ein Bohrer gemäß einer achten Ausführungsform gezeigt. Auch bei dieser Ausführungsform sind der Kerndurchmesser und der Spiraldurchmesser des Bohrers konstant. Die Steigung der Wendel sinkt ausgehend von einem größeren Wert im vorderen Abschnitt L1 des Schaftes zunächst auf einen kleineren Wert im mittleren Abschnitt L2 des Schaftes ab. Von diesem kleineren Wert steigt sie wieder auf einen größeren Wert im hinteren Abschnitt L3 des Schaftes an. Durch die entsprechend große Breite der Wendel im Bereich der Bohrspitze ergibt sich eine große Verschleißfestigkeit.

## Patentansprüche

1. Bohrer mit einer Bohrspitze (12), einem Schaft (10), einem Antriebsabschnitt (14) und einer Wendel (16), die sich entlang dem Schaft erstreckt, wobei sich die Geometrie der Wendel (16) entlang dem Schaft ändert, **dadurch gekennzeichnet, daß** die Breite der Wendel (16), gemessen parallel zur Längsachse des Bohrers, in den Bereichen mit kleiner Steigung der Wendel (16) kleiner ist als in Bereichen mit großer Steigung.

2. Bohrer nach Anspruch 1, **dadurch gekennzeichnet, daß** der Kerndurchmesser des Schaftes (10) im Bereich der Bohrspitze (12) geringer ist als angrenzend an den Antriebsabschnitt (14).

3. Bohrer nach Anspruch 1, **dadurch gekennzeichnet, daß** der Kerndurchmesser des Schaftes (10) im Bereich der Bohrspitze (12) größer ist als angrenzend an den Antriebsabschnitt (14).

4. Bohrer nach einem der Ansprüche 1 bis 3, **dadurch gekennzeichnet, daß** die Steigung der Wendel (16) im Bereich der Bohrspitze (12) größer ist als angrenzend an den Antriebsabschnitt (14).

5. Bohrer nach einem der Ansprüche 1 bis 3, **dadurch gekennzeichnet, daß** die Steigung der Wendel (16) im Bereich der Bohrspitze (12) kleiner ist als angrenzend an den Antriebsabschnitt (14).

## Claims

1. A drill comprising a drilling tip (12), a shank (10), a drive section (14), and a helix (16) which extends along the shank, the geometry of the helix (16) varying along the shank, **characterized in that** the width of the helix (16), as measured parallel to the longitudinal axis of the drill, is smaller in the areas of the helix (16) with a small pitch than in areas with a large pitch.

2. The drill according to claim 1, **characterized in that** the core diameter of the shank (10) is smaller in the area of the drilling tip (12) than adjacent to the drive section (14).

3. The drill according to claim 1, **characterized in that** the core diameter of the shank (10) is larger in the area of the drilling tip (12) than adjacent to the drive section (14).

4. The drill according to any of claims 1 to 3, **characterized in that** the pitch of the helix (16) is larger in the area of the drilling tip (12) than adjacent to the drive section (14).

5. The drill according to any of claims 1 to 3, **characterized in that** the pitch of the helix (16) is smaller in the area of the drilling tip (12) than adjacent to the drive section (14).

## Revendications

1. Foret comportant une pointe de foret (12), une tige (10), un tronçon d'entraînement (14) et une hélice (16) qui s'étend sur le long de la tige, la géométrie de l'hélice (16) variant le long de la tige, **caractérisé en ce que** la largeur de l'hélice (16), mesurée parallèlement à l'axe longitudinal du foret, est plus petite dans les régions qui ont un petit pas que dans les régions qui ont un grand pas.

2. Foret selon la revendication 1, **caractérisé en ce que** le diamètre du coeur de la tige (10) est plus petit dans la région de la pointe de foret (12) qu'à proximité du tronçon d'entraînement (14).

3. Foret selon la revendication 1, **caractérisé en ce que** le diamètre du coeur de la tige (10) est plus grand dans la région de la pointe de foret (12) qu'à proximité du tronçon d'entraînement (14).

4. Foret selon l'une des revendications 1 à 3, **caractérisé en ce que** le pas de l'hélice (16) est plus grand dans la région de la pointe de foret (12) qu'à proximité du tronçon d'entraînement (14).

5. Foret selon l'une des revendications 1 à 3, **caractérisé en ce que** le pas de l'hélice (16) est plus petit dans la région de la pointe de foret (12) qu'à proximité du tronçon d'entraînement (14).
